Europäisches Patentamt

**European Patent Office**

Office européen des brevets

(11) Publication number: **0 156 194**
**A2**

# (12) EUROPEAN PATENT APPLICATION

(21) Application number: **85102425.7**

(22) Date of filing: **04.03.85**

(51) Int. Cl.⁴: **B 25 J 9/10**

(30) Priority: **09.03.84 US 587910**

(43) Date of publication of application:
**02.10.85 Bulletin 85/40**

(84) Designated Contracting States:
**DE FR GB IT SE**

(71) Applicant: **Cincinnati Milacron Inc.**
**(a Delaware Corporation), 4701 Marburg Avenue**
**Cincinnati, Ohio 45209(US)**

(72) Inventor: **Watson, Robert Charles**
**7203 Crinstead Court Cincinnati**
**Ohio 45243(US)**

(74) Representative: **Lally, William et al,**
**FORRESTER & BOEHMERT Widenmayerstrasse 4/I**
**D-8000 Munchen 22(DE)**

(54) **Industrial manipulator.**

(57) An industrial manipulator, e.g. electric robot, is provided having a self-contained, closed system counter balance means for applying a gravity countering force to a load carrying driven member (15, 55, 61) which is movable up and down. The self-contained, closed system, hydro-pneumatic counter balance means comprise an accumulator (19, 51, 72), having a variable volume of compressed air applying a force to a hydraulic oil, in closed circuit fluid connection (20, 40, 52, 74) to a hydraulic cylinder charged with hydraulic oil and having a piston rod (23, 32, 54, 67) linked to the driven member (15, 55, 61) for applying a gravity countering forces to the member. Motion of the driven member (15, 55, 61) produces a variation in the volume of compressed air and, therefore, the pressure of the compressed air in the accumulator (19, 51, 72) exerting a force on the hydraulic oil. Advantageously, the robot does not require an external source of pressurised fluid and external controls for operating the gravity countering means.

EP 0 156 194 A2

Croydon Printing Company Ltd

Title: "Industrial Manipulators"

A common type of industrial manipulator comprises a movable element or component (e.g. an arm or part of an arm) having an upward movement that is effected by the force of gravity. Gravity opposes the upward movement of the element and at any given stationary position of the element in that upward travel tends to force the element downward. In some cases this downward force on the element or arm can cause the arm to slowly change position thereby making the retained, reliable, accurate positioning of the arm difficult. To reduce this problem it is common practice to employ DC electric servo-motors particularly adapted to have a braking action that counters the effect of gravity on the arm. However, as the size of the manipulator increases and the load capacity of the arm grows it is necessary to use larger DC electric servo-motors. This approach is costly in money and energy consumption.

Another prior art approach to treating the problem of the gravity effect on a manipulator arm is disclosed in U.S. 4,289,441 issued September 15, 1981. This patent teaches a robot having a pneumatic cylinder mounted above a vertical movable body guided by at least one vertical guide pillar, to apply an upward force to the movable body. In accordance with the disclosure of the patent the pneumatic cylinder is connected to a control valve and source of compressed air separate from the robot. This approach adds equipment, cost and complexity to the robot.

According to this invention there is provided an industrial manipulator comprising:

a) a driven member movable up and down to controllably position an object in space;

b) a driving means for moving said member; and

c) means coupled to the member for applying a gravity countering force to the member, said means comprising:

1) a fluid pressure piston/cylinder device coupled to the member, and

2) a pressurised fluid accumulator in closed loop connection to the cylinder of said device.

The piston of the piston/cylinder device may be coupled directly to the driven member, or may be linked to the driven member by a chain engaging with a sprocket, or by cable passing over pulleys.

The fluid cylinder may by hydraulic, or may be pneumatic. Where the fluid pressure means is wholly hydraulic, the accumulator may be a deadweight accumulator, a spring-loaded accumulator or a piston-type accumulator.

Advantageously however the pressurised fluid means utilises a combination of hydraulic and pneumatic fluid, and the accumulator is a diaphram-type of accumulator, the pressurised fluid means comprising hydraulic fluid in the piston/cylinder device, in the means connecting the piston/cylinder device and the accumulator, and in an adjacent chamber of the accumulator, and comprising pneumatic fluid in the accumulator on the opposite side of the diaphram.

Preferably the driving means comprises an electric servo-motor and ball screw, and comprises at least two pillars supporting and guiding the driven member.

The invention is particularly advantageous in relation to an industrial manipulator in the form of an industrial robot, particularly of the kind whose arm position, within the volume of space of operation of the arm, is defined in a cylindrical coordinate system with the axis of rotation of the robot arm coinciding with the longitudinal axis of the cylindrical volume of space within which the robot arm operates. Such a robot generally comprises a movable member (e.g. arm) that is moved vertically in a straight line path and horizontally in a straight line path by electric servo-motors, and has an electric servo-motor powered rotating component carrying the arm to cause the arm to move in a horizontal circular path in a plane perpendicular to the vertical straight line motion path of the arm. These motions of robot arm combine to define a cylindrical volume of space in which the arm operates, and hence this type of robot is known and referred to as herein as a cylindrical coordinate robot.

There will now be given a detailed description, to be read with reference to the accompanying drawings, of three industrial manipulators which are preferred embodiments of this invention, and which have been selected for the purposes of illustrating the invention by way of example.

In the accompanying drawings:

FIGURE 1 shows a side elevation view of a schematic representation of the industrial manipulator which a first embodiment of this invention;

FIGURE 2 shows a side elevation view of a schematic representation of the industrial manipulator which is a second embodiment of this invention;

FIGURE 3 shows a schematic form a closed loop pressurised fluid means for applying a gravity countering force and fluid flow in a downward movement of a driven movable member of the first embodiment;

FIGURE 4 shows in schematic form a closed loop pressurised fluid means for applying a gravity countering force and fluid flow in an upward movement of the driven movable member of the first embodiment; and

FIGURE 5 shows a side elevation view of a schematic representation of the industrial manipulator which is the third embodiment of this invention.

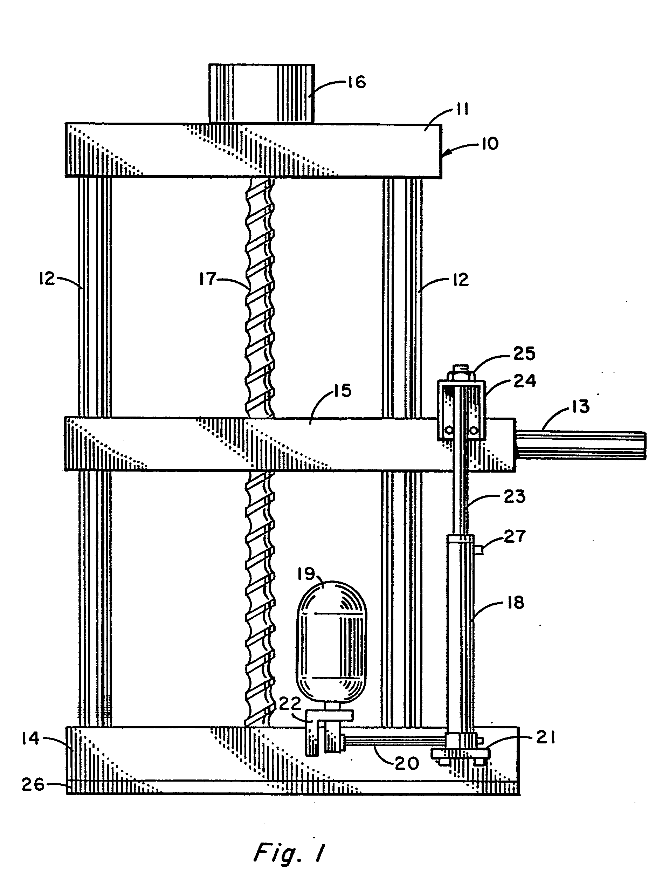

Turning to Figure 1 there is shown a schematic representation of a cylinder coordinate system industrial manipulator or robot 10 in accordance with this invention. The robot 10 has a horizontally movable member afforded by an arm 13 attached to a vertically movable member 15 which is mounted on and guided by pillars 12 which are in turn fixed to a base 14 and top plate 11. In operation a motor 16, preferably an electric servo-motor, more preferably a DC electric servo-motor, drives a ball screw 17 attached to the member 15 to move the member 15 up and down. As the member 15 moves down an extended piston rod 23, attached to the member 15 by a bracket 24 and nuts 25, is forced back into a pressurised fluid filled cylinder 18, attached to the base 14 by a mounting 21, forcing pressurised fluid from the cylinder 18 into an accumulator 19, attached to the base 14 by a fixture 22, through a pipe 20. The pressurised fluid in the cylinder 18 exerts an upward force on a piston, not shown, attached to the piston rod 23 which in turn transmits the force to the bracket 24, in turn applying an upward gravity countering force to the member 15. Forcing fluid from the cylinder 18 into the accumulator 19 increases the pressure of the fluid and thereby increases the upward gravity countering force applied to the member 15. At the lower limit of the downward movement of the member 15 the pressure of the fluid in the closed loop pressurised fluid means (i.e. the pressure of the fluid in the accumulator 19, the cylinder 18 and the pipe 20) is at maximum and thus upward gravity countering force exerted on the member 15 is at a maximum. As the motor 16 and the ball screw 17 drive the member 15 up, the gravity countering force exerted on the member 15 by the rod 23 through the bracket 24 reduces the load on the motor 16 over that load which would be required to move the member 15 up without the gravity-countering force exerted by the rod 23 on the member 15. When the member 15 moves up pressurised fluid flows from the accumulator 19 through the pipe 20 to the cylinder 18 and the rod 23 extends from the cylinder 18 exerting a gravity countering force on the member 15. At the upper limit of travel of the member 15 the rod 23 is at its maximum extension and the pressurised fluid in the accumulator 19 and the cylinder 18 is at its lowest pressure, thereby exerting the lowest gravity countering force on the member 15. The accumulator 19 and the cylinder 18 are connected in a closed-loop by the pipe 20 such that the amount of fluid in the system remains constant and no external of pressurised fluid is required. The cylinder 18 is equipped with an exhaust port 27, open to the atmosphere, in the cylinder wall at the upper end of the cylinder. The base 14 may be rotated on a platform 26 by a drive means (e.g. electric servo-motor) not shown. The arm 13, mounted on the member 15, is moved horizontally in a straight line path by a drive means (e.g. electric servo-motor) not shown. Preferably a hydro-pneumatic pressurised fluid system is employed wherein the accumulator 19 has a flexible diaphram dividing the accumulator into two chambers, one of which communicates with the pipe 20 and the other being isolated from the pipe 20. The chamber communicating with the pipe 20, the pipe 20 itself and the cylinder 18 contain a hydraulic fluid. The chamber isolated from the pipe 20 contains compressed air or other inert gas (e.g. nitrogen). During the downward movement of the member 15 hydraulic fluid flows from the cylinder 18 into the accumulator 19 to press against the flexible diaphram compressing the chamber containing air and increasing the pressure of the air in that chamber. This in turn increases the pressure of the hydraulic fluid which in turn results in an increased gravity-countering force applied to the member 15. In the upward movement of the member 15 hydraulic fluid flows from the accumulator 19 to the cylinder 18, the compressed air pressing against the diaphram expands the air chamber as hydraulic fluid leaves the hydraulic fluid chamber.

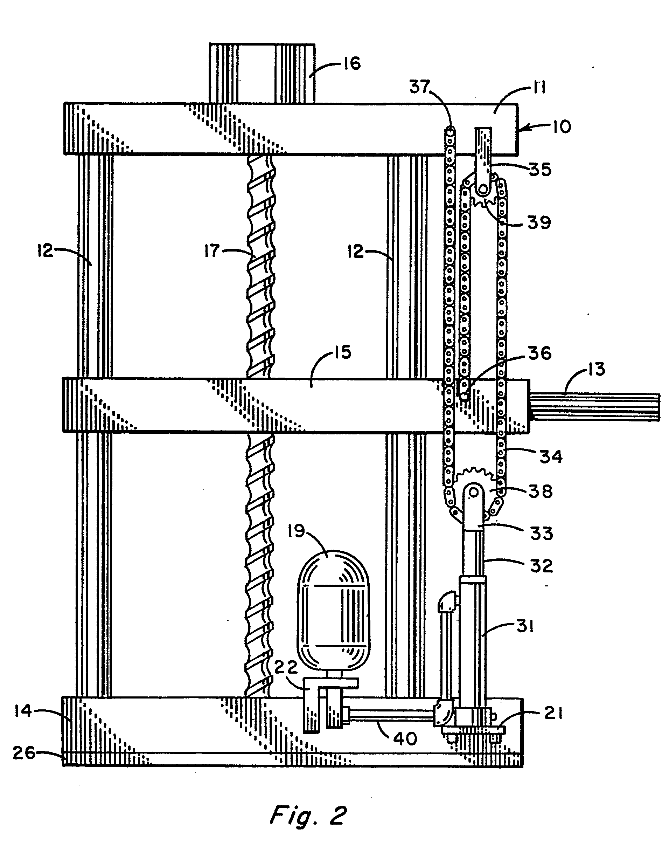

A second embodiment of this invention is shown in a schematic respresentation in Figure 2. In many respects the robot schematically represented in Figure 2 is similar to the robot schematically represented in Figure 1 (e.g. comprising movable member 15, drive motor 16, pillars 12, arms 13 ball screw 17, accumlator 19, base 14 and platform 26). The significant differences shown in Figure 2 over Figure 1 are the manner of connecting the rod 32 of the cylinder 31 to the movable member 15, the manner of applying a gravity countering force to the member 15, the manner of operation of the cylinder 31 with respect to the side of the piston (not shown) of the cylinder 31 experiencing fluid pressure, the connection of the accumulator 19 to the cylinder 31 in respect to which side of the piston (not shown) of the cylinder 31 the pressurised fluid is introduced into the cylinder 31 and the generally smaller size of cylinder 31. Referring to Figure 2, as the motor 16 (e.g. electric servo-motor, preferably a DC electroc servo-motor) drives the ball screw 17 to move the member 15 down a chain 34 attached to member 15 by bolt 36 and passing around a spocket wheel 39 of sprocket 35 attached to the top plate 11 and a sprocket wheel 38 of sprocket 33 attached to the rod 32 and attached to the top plate 11 by bolt 37, pulls the rod 32 to extend the rod 32 from the cylinder 31 attached to the base 14 by mounting 21. As the rod 32 is extended from the cylinder 31 pressurised fluid flows from the cylinder 31 to the accumulator 19, fixed to the base 14 by a fixture 22, through pipe 40. The pressurised fluid places a force on the piston, not shown, attached to the rod 32 in the cylinder 31 which is transmitted as a gravity-countering force to the member 15 though a link chain 34 and sprockets 33 and 35. When the drive motor 16 drives ball screw 17 to drive member 15 in the up direction, the rod 32 retreats into the cylinder 31 by the force of the pressurised fluid acting on the rod side of the piston (not shown) attached to the rod 32 in the cylinder 31 and pressurised fluid flows from the accumulator 19 to the rod side of the piston (not shown) in the cylinder 31 through pipe 40. The force on the piston (not shown) in the cylinder 31 created by the pressurised fluid is transmitted through the rod 32, link chain 34 and sprockets 33 and 35 to the member 15 as a gravity-countering force. In the second embodiment the load on the motor 16 is reduced during the upward movement of the member 15, over that which would present in the absence of this invention, through the combination of accumulator 19, pipe 40, cylinder 31, rod 32, link chain 34, sprockets 33 and 35 and the pressurised fluid in the closed loop connection between the accumulator 19 and the cylinder 31. Preferably in the robot schematically represented in Figure 2, the accumulator 19 has a flexible diaphram or flexible membrane which partitions the accumulator 19 into a pressurised air chamber and a hydraulic fluid chamber communicating with the pipe 40 with hydraulic fluid also being present in the pipe 40 and cylinder 31. This arrangement, in which the pressurised air and hydraulic fluid are separated from each other by flexible diaphram or flexible membrane such that each can exert forces on the other without coming in contact with each other, is to be known as a hydro-pneumatic system. In operation the volume of air in the accumulator is compressed and expanded with the downward and upward movement respectively of the member 15. The arm 13 mounted on the member 15 moves in a horizontal straight line path driven by a drive motor(e.g. electric servo-motor, preferably a DC electric servo-motor) not shown. The base 14 is rotated on the platform 26 by a motor (e.g. electric servo-motor preferably DC electric servo-motor). The closed loop pressurised fluid connection between the accumulator 19 and the cylinder 31 eliminates the need for an outside source of pressurised fluid to the cylinder 31. In place of the link chain 34 and sprockets 33 and 35 of Figure 2, there may be used a wire cable and pulleys respectively.

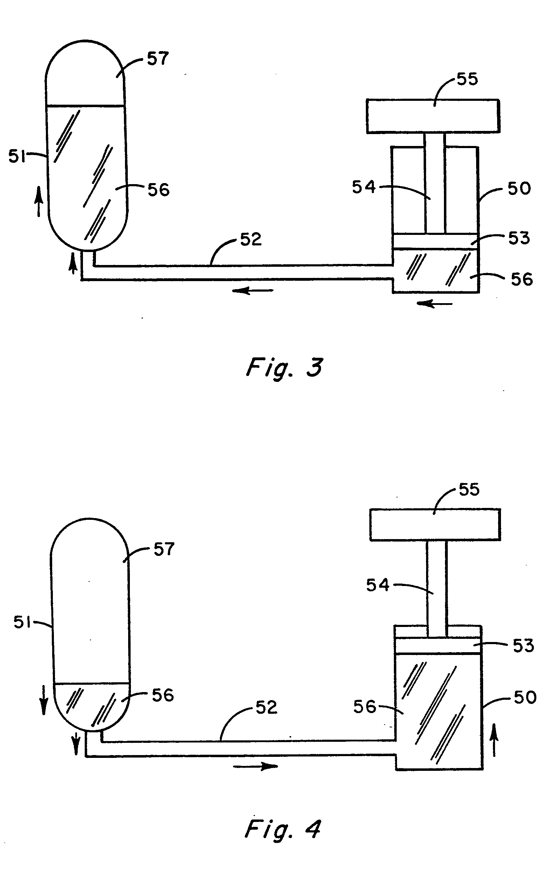

Figure 3 and 4 schematically show the closed loop flow path of pressurised fluid between the accumulator and the cylinder in accordance with the practice of this invention and the state of the accumulator and cylinder at or near the limits of vertical travel of the movable member. In Figure 3 and 4 the member 55 would be driven up and down by a means (e.g. electric motor) not shown. For purposes of explaining the closed loop flow of the pressurised fluid between the accumulator and the cylinder in the practice of this invention simplified respresentations of the accumulator and cylinder are given in Figure 3 and 4. Thus, although the accumulator of the type represented in Figure 3 and 4 would be usable in the practice of this invention (i.e. a fixed volume accumulator having a single chamber and no mechanical means for applying pressure directly to the fluid in the chamber) it would be preferable to employ an accumulator having a flexible membrane inside the accumulator forming two chambers isoloated from each other or other well known accumulators having a variable volume chamber. These preferred accumulators are particularly desirable for using hydraulic fluid as a pressure fluid in the practice of this invention. Figure 3 and 4 schematically depict the use of hydro-pnuematic pressure fluid system (e.g. compressed air and hydraulic oil). The cylinder 50, having a piston 53 and rod 54 attached thereto, is closed loop connected to the accumulator 51 by a pipe 52. A Hydraulic fluid 56 flows between the cylinder 50 and accumulator 51. A variable volume of pressurised air 57 is present above the hydraulic fluid supply 56 in the accumulator 51. In Figure 3 the member 55 is at or near its limit of downward travel. Nearly all of the hydraulic fluid 56 has been pushed out of the cylinder 50 and transferred through the pipe 52 to the accumulator 51, as shown by the arrows, to compress the volume of pressurised air 57 to a minimum value and maximum pressure. As the member 55 moves upward from its limit of downward travel (Figure 3) the volume of pressurised air expands, forcing hydraulic fluid 56 from the accumulator 51 under the pressure of the pressurised air into the cylinder 50 through pipe 52, as shown by the arrows in Figure 4, to exert a force against the piston 53 which is transferred by rod 54, connected to the piston 53, to the movable member 55 as a gravity-countering force. In Figure 4 the movable member 55 is at or near its limit of its upward travel, the volume of pressurised air 57 in the accumulator 51 is at its maximum and the volume of hydraulic fluid 56 in the accumulator 51 is at its mimimum. The force transmitted to the movable member 55 as a gravity countering force will be at or near its maximum value in Figure 3 and at or near its minimum value in Figure 4.

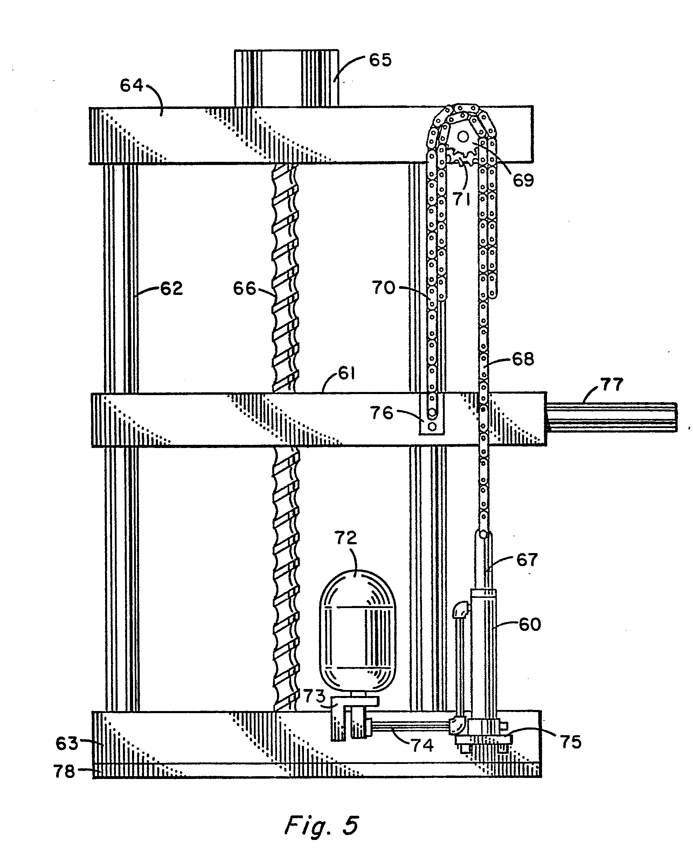

In Figure 5 an alternative connection between the cylinder 60 and the movable member 61 is schematically shown. The member 61 is driven up and down on guide posts 62 attached to the base 63 and top plate 64 by the drive motor 65 and the ball screw 66 driven by the motor 65. The cylinder 60 is connected by the piston rod 67, a chain 68 passing over a sprocket 69 and a chain 70 passing over a sprocket 71 and attached to member 61 by connector 76. The chains 68 and 70 have free ends on the opposite sides of the sprockets 69 and 71 respectively. As the member 61 rises the piston rod 67 retreats into cylinder 60 under the force of the pressurised fluid flowing from the accumulator 72, attached to the base 63 by flanges 73, through the pipe 74 to the cylinder 60 attached to the base 63 by support 75. Preferably the accumulator 72, pipe 74 and cylinder 60 comprise a hydro-pneumatic closed system where hydraulic oil is present in accumulator 72, pipe 74 and cylinder 60 and a volume of compressed air is above the hydraulic oil in accumulator 72 to impart a pressure to the hydraulic oil. The rod 67 retreating into the cylinder 60 exerts a downward force on the chain 68 to turn the sprocket 69 and sprocket 71, rigidly coupled to sprocket 69 on a common shaft. As the the sprocket 71 turns in the same direction as sprocket 69 it imparts an upward force on the chain 70 and hence the member 61 attached to the chain 70. The upward force exerted by chain 70 on the member 61 is a gravity-countering force. Thus, the force of the pressurised fluid on the piston, not shown, in the cylinder 60 is transmitted as a gravity-countering force to the member 61. When the drive motor 65 via ball screw 66 attached thereto drives the member 61 down, a downward force is exerted on the chain 70 that turns the sprocket 71 which turns the sprocket 69 in the same direction. As the sprocket 69 turns an upward force is placed on the chain 68 which extends the rod 67 from the the cylinder 60 and fluid is forced from cylinder 60 by the piston therein, not shown, through pipe 74 into the accumulator 72 thereby increasing the pressure of the fluid in the accumulator 72. This increased pressure in the accumulator 72 is transmitted to the fluid in the pipe 74 and hence the fluid in the cylinder 60. Thus, the increased pressure in the cylinder 60 can have a weight-supporting effect on the member 61 and any load carried by the member 61. The sprockets 69 and 71 may desirably be arranged such that the outer circumference of the sprocket 71 is some multiple of (e.g. twice) the outer circumference of the sprocket 69. Alternatively for the same tooth size and pitch for the two the sprockets the diameter of the sprocket 71 may be a multiple of the diameter of the sprocket 60 or the number of teeth in the sprocket 71 may be some multiple of the number of teeth in sprocket 69. These relationships between sprockets 69 and 71 advantageously permit the use of a shorter cylinder (i.e. a cylinder having a shorter piston travel or stroke) than would otherwise be needed for obtaining the desirable extent of vertical movement of the member 61. The base 63 is rotationally supported on a platform 78 and is rotated on the platform 78 by a drive means not shown (e.g. electric servo-motor). The member 61 has a horizontally-movable arm 77 mounted thereon driven by a drive means (e.g. electric servo-motor) not shown.

Preferably, in the practice of this invention the maximum pressure of the pressurised fluid is adjusted at the lower limit of travel of the movable member to a value such that the force on the piston of the cylinder equals the sum of the frictional forces acting on the drive means and the movable member, the maximum force of gravity acting on the movable member, and the maximum downward force the drive means, driving the movable member, can exert on the movable member without overloading the drive means. The pressurised air can be replaced with an other inert pressurised gas (e.g. nitrogen) in the practice of this invention. Where the sole pressurised fluid used is a liquid (e.g. hydraulic oil) it is necessary that the accumulator provide a mechanical load on the liquid and storage space for liquid moved into the accumulator as are commonly known in the accumulator art. Various accumulators as are well known in the art may be used in the practice of this invention such as, for example, a piston type accumulator, a diaphram type accumulator, weight loaded accumulator, spring type accumulator and bladder type accumulator.

The industrial manipulator that is the preferred embodiment of this invention, may be any of several well known types of robots having a member movable up and down including but not limited to articulated robots and cylindrical coordinate robots.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## CLAIMS:

1. An industrial manipulator comprising:

a) a driven member (15, 55, 61) movable up and down to controllably position an object in space;

b) a driving means (16, 65) for moving said member (15, 55, 61); and

c) means coupled to the member for applying a gravity countering force to the member, (15, 55, 61) said means comprising:

   1) a fluid pressure piston/cylinder device (18, 23; 31, 32;, 50, 53, 54; 60, 67) coupled to the member, and

   2) a pressurised fluid accumulator (19, 51, 72) in closed loop connection to the cylinder (18, 31, 50, 60) of said device

2. An industrial manipulator according to Claim 1 wherein the piston (23, 53) of the piston/cylinder device is directly coupled to the driven member (15, 55).

3. An industrial manipulator according to Claim 1 wherein the piston (32, 67) of the piston/cylinder device is linked to the driven member (15, 61) by a chain (34; 68, 70) engaging a sprocket (39; 69, 71) and attached to the driven member (15, 61) and the piston (32, 67).

4. An industrial manipulator according to Claim 1 wherein the piston of the piston/cylinder device is linked to the driven member by a cable passing over a pulley and connected to the driven member and the piston.

5. An industrial manipulator according to any one the the preceding claims wherein the fluid cylinder (18, 31, 50, 60) is a hydraulic cylinder.

6. An industrial manipulator according to any one of Claims 1 to 4 where the fluid cylinder (18, 31, 50, 60) is a pneumatic cylinder.

7. An industrial manipulator according to anyone of the preceding claims wherein the accumulator is selected from the group of accumulators

consisting of dead weight accumulator, spring loaded accumulator and piston type accumulator.

8. An industrial manipulator according to Claim 5 wherein the accumulator is a diaphram type accumulator.

9. An industrial manipulator according to Claim 8 wherein the pressurised fluid is a combination of compressed air and hydraulic oil, the driving means comprises an electric servo-motor(16, 65) and ball screw (17, 66) and further having at least two pillars (12, 12; 62, 62) supporting and guiding the driven member (15, 61).

10. An industrial manipulator according to any one of the preceding claims wherein the manipulator is an industrial robot.

0156194

*Fig. 1*

Fig. 2

0156194

*Fig. 3*

*Fig. 4*

0156194

*Fig. 5*